# FASCICULE DE BREVET EUROPEEN

(11) **EP 0 683 327 B1**
(45) Date de publication et mention de la délivrance du brevet: **03.05.2000**
(21) Numéro de dépôt: 95400725.8
(22) Date de dépôt: 31.03.1995
(51) Int. Cl.: F16B 37/08, F16L 3/237

(54) **Attache de fixation de câbles tuyauteries ou analogues**
Befestigungselement für Kabel, Rohre oder dergleichen
Fastener for cables, pipes or the like

(30) Priorité: 18.05.1994 FR 9406083
(43) Date de publication de la demande: 22.11.1995
(73) Titulaire: RAPID S.A., F-75017 Paris (FR)
(72) Inventeur: Leon, Jean Pierre, F-78800 Houilles (FR)
(74) Mandataire: Durand, Yves Armand Louis

(56) Documents cités:
- DE-U- 8 525 508
- FR-A- 2 563 891
- FR-A- 2 607 201

## Description

La présente invention a essentiellement pour objet une attache permettant la fixation de câbles, tuyauteries ou analogues sur un élément de construction quelconque ou sur un véhicule.

On connaît déjà des attaches de fixation comprenant, d'une manière générale, un fût auquel sont associées des parties en forme de berceau aptes à recevoir par exemple un faisceau de câbles, ledit fût comportant intérieurement une pluralité de lèvres susceptibles de coopérer avec le filetage d'une vis soudée par sa tête sur par exemple un élément métallique appartenant à un véhicule automobile, de sorte que l'attache peut être montée sur la vis par simple pression.

Ces attaches pouvaient comporter dans le fût des moyens de guidage permettant le montage sur la vis, mais ces moyens de guidage étaient le plus souvent déficients et n'étaient pas performants sur toute la longueur de parcours de la vis dans le fût de l'attache lors du montage.

Ainsi, le document FR-A-2607201 divulgue une attache de fixation d'accessoires sur véhicules automobiles du type comprenant un fût, lequel fût comprend intérieurement une pluralité de lèvres susceptibles de coopérer avec le filetage d'une vis.

On peut également citer le document DE-U-8525508 sur lequel le préambule de la revendication 1 se base, qui décrit une attache de fixation de câbles, tuyauteries ou analogues du type comprenant un fût auquel est associée au moins une partie en forme de berceau apte à recevoir lesdits câbles ou lesdites tuyauteries, lequel fût comprend intérieurement une pluralité de lèvres susceptibles de coopérer avec le filetage d'une vis, ainsi que des moyens de guidage de la vis dans ledit fût, lesdits moyens étant constitués par au moins deux ergots ou analogues faisant saillie à l'intérieur du fût et comportant une partie arquée correspondant sensiblement à la forme extérieure de la vis.

Aussi, la présente invention a pour but de remédier notamment à l'inconvénient ci-dessus en proposant une attache perfectionnée permettant un guidage parfait au montage sur toute la longueur de la vis, de sorte que le montage est ainsi rendu plus facile et sans risque de détérioration de l'attache. Par conséquent une fixation efficace et solide de l'attache est toujours assurée.

A cet effet, l'invention a pour objet une attache de fixation de câbles, tuyauteries ou analogues du type comprenant un fût auquel est associée au moins une partie en forme de berceau apte à recevoir lesdits câbles ou lesdites tuyauteries, lequel fût comprend intérieurement une pluralité de lèvres susceptibles de coopérer avec le filetage d'une vis ainsi que des moyens de guidage de la vis dans ledit fût, constitués par au moins deux ergots ou analogues faisant saillie à l'intérieur du fût et comportant une partie arquée correspondant sensiblement à la forme extérieure de la vis, caractérisée en ce que lesdits ergots font saillie orthogonalement à l'axe du fût et sont situés respectivement entre deux lèvres adjacentes l'une des lèvres étant située au-dessus de l'autre.

De préférence, deux ergots sont situés dans un même plan horizontal.

Suivant une autre caractéristique de cette attache, le fût est formé de deux parois parallèles munies chacune des lèvres précitées, et l'un des ergots est situé au voisinage du bord vertical de l'une des parois, tandis que l'autre ergot est situé au voisinage du bord vertical opposé de l'autre paroi.

On précisera encore ici que chaque ergot comporte une partie arquée et concave tournée du côté de l'axe du fût.

Selon encore une autre caractéristique de l'invention, chaque ergot prend naissance sur une barrette ou analogue solidaire de la paroi à laquelle il est associé et s'étendant sur toute la largeur de ladite paroi entre deux lèvres adjacentes.

Suivant un mode de réalisation préféré, les ergots ont la forme d'éléments plans de faible épaisseur, la partie arquée et concave précitée étant réalisée sur la tranche de ces éléments.

On observera encore que la barrette précitée s'étend en direction de l'axe du fût sur une distance inférieure à la longueur des lèvres faisant saillie dans le fût.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue de côté et en élévation d'une attache de fixation perfectionnée selon cette invention, illustrée en position prête à la fixation au droit d'un élément fileté.

La figure 2 est une vue partielle et en perspective de l'attache, suivant la flèche II de la figure 3, et illustrant le fût de l'attache.

La figure 3 est une vue en coupe faite suivant la ligne III-III de la figure 1.

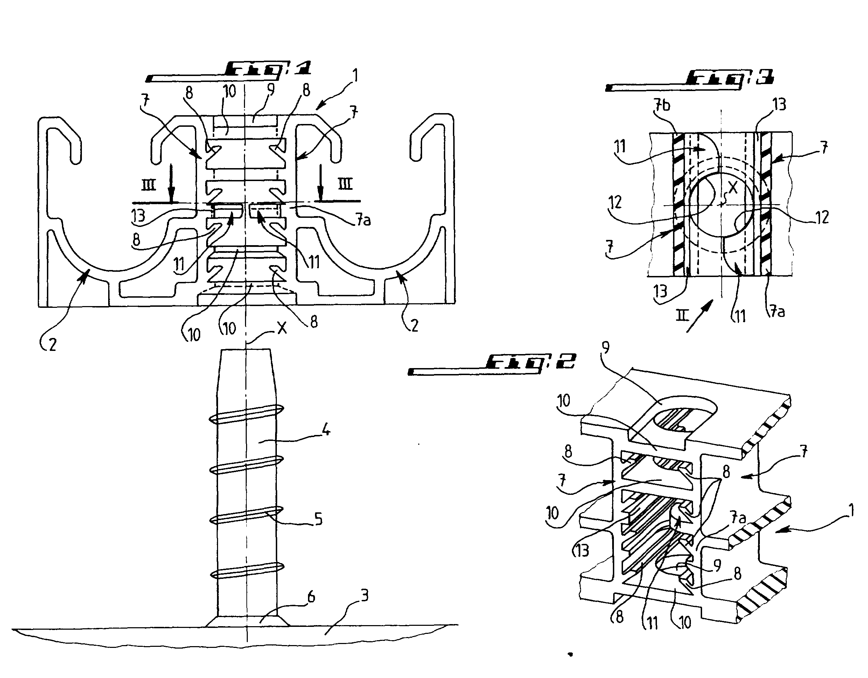

En se reportant notamment à la figure 1, on voit une attache de fixation réalisée en une seule pièce par moulage d'une matière plastique appropriée et comprenant essentiellement un fût 1 comportant de part et d'autre une partie en forme de berceau 2 apte à recevoir, par clippage par exemple, un faisceau de câbles ou tuyauteries (non représentés) devant être rendu solidaire d'un véhicule automobile par exemple.

On a montré en 3 sur la figure 1 un élément de véhicule comportant une vis 4, à filet 5 couché par exemple et dont la tête 6 est soudée sur l'élément métallique 3. Ainsi, l'attache pourra être montée sur la vis 4 par simple pression, du haut vers le bas, comme on peut le comprendre en se reportant à la figure 1, et cela de façon que la vis 4 pénètre dans le fût 1.

Ce fût 1 est formé de deux parois parallèles 7 comportant une pluralité de lèvres 8 dirigées vers l'intérieur du fût et laissant entre elles un passage inférieur au diamètre de la vis 4. Ces lèvres 8 sont inclinées vers le haut du fût 1 qui comporte à ses extrémités des orifices 9, de sorte qu'elles offrent une résistance faible à la vis 4 lors du montage de l'attache, et au contraire une résistance importante à l'arrachement de ladite attache.

Dans le fût 1 sont prévues des pattes 10 reliant les parois 7 du fût 1 entre elles et assurant la solidarisation des parties 2 en forme de berceau entre elles et avec le fût 1.

Ces pattes 10 sont alternativement décalées dans le sens de la hauteur du fût 1, de façon à ménager entre elles un passage supérieur au diamètre de la vis 4, si bien qu'au montage, elles ne constituent pas un moyen de guidage positif, fiable et efficace de l'attache sur la vis 4.

Conformément à l'invention, il est prévu dans le fût 1 deux ergots 11 faisant saillie à l'intérieur dudit fût orthogonalement à son axe X, ces ergots ménageant entre eux un espace correspondant au diamètre de la vis 4 et permettant un guidage positif et efficace de l'attache sur la vis 4 lors du montage.

Ces ergots 11 sont, comme on le voit bien sur la figure 1, situés dans un même plan horizontal entre deux lèvres adjacentes 8. On pourrait parfaitement, sans sortie du cadre de l'invention, prévoir plusieurs paires d'ergots 11 étagées sur la hauteur du fût 1 et situées entre deux lèvres adjacentes 8. Egalement, les deux ergots 11 de la paire ou de chaque paire d'ergots pourraient être situés dans des plans différents.

Chaque ergot 11 est associé à l'une des deux parois parallèles 7 constituant le fût 1 de l'attache.

Plus précisément, et comme on le voit mieux sur la figure 3, l'un des ergots est situé au voisinage du bord vertical 7a de l'une des parois 7, tandis que l'autre ergot est situé au voisinage du bord vertical opposé 7b de l'autre paroi 7.

Ainsi, les deux ergots 11 agissent en quelque sorte en opposition pour le guidage du fût 1 sur la vis 4, c'est-à-dire suivant un diamètre de cette vis.

Plus précisément, et comme cela est encore bien visible sur la figure 3, chaque ergot 11 comporte une partie 12 arquée et concave du côté de l'axe X du fût 1. On comprend ainsi que les parties 12 opposées et concaves des deux ergots 11 pourront agir positivement suivant un diamètre de la vis pour que l'attache soit guidée sur cette vis lors du montage.

Chaque ergot 11 prend racine sur une barrette 13 bien visible sur les figures et venant de moulage avec l'attache. Plus précisément, la barrette 13 est solidaire de la paroi 7 à laquelle est associé l'ergot 11. La barrette 13 s'étend sur toute la largeur de la paroi 7 entre deux lèvres adjacentes 8, et elle confère ainsi à chaque ergot qui lui est associé une certaine rigidité pour le guidage de l'attache sur la vis 4.

Chaque ergot 11, comme on le voit mieux sur les figures 1 et 2, a la forme d'un élément plan d'épaisseur relativement faible, la partie arquée et concave 12 étant réalisée sur la tranche desdits éléments plans.

On observera encore ici que la barrette 13 constituant en quelque sorte le support de chaque ergot 11 s'étend en direction de l'axe X du fût suivant une distance relativement faible. Plus précisément, comme on le voit bien sur la figure 1, cette distance est inférieure à la longueur des lèvres 8 faisant saillie à l'intérieur du fût 1, et cela de façon que les barrettes 13 ne perturbent pas le guidage de la vis 4 lors du montage de l'attache sur ladite vis, ce guidage étant exclusivement assuré par les ergots 11 à partie arquée 12.

On a donc réalisé suivant l'invention une attache de fixation pour câbles électriques ou tuyauteries, qui comporte des éléments de guidage positifs et efficaces de l'attache sur la vis, et cela sans tâtonnements ni risques de détérioration du fût de l'attache au montage.

Bien entendu, l'invention n'est nullement limitée au mode de réalisation décrit et illustré qui n'a été donné qu'à titre d'exemple.

## Revendications

1. Attache de fixation de câbles, tuyauteries ou analogues du type comprenant un fût (1) auquel est associée au moins une partie (2) en forme de berceau apte à recevoir lesdits câbles ou lesdites tuyauteries, lequel fût (1) comprend intérieurement une pluralité de lèvres (8) susceptibles de coopérer avec le filetage (5) d'une vis (4) ainsi que des moyens de guidage de la vis (4) dans ledit fût constitués par au moins deux ergots ou analogues (11) faisant saillie à l'intérieur du fût (1) et comportant une partie arquée (12) correspondant sensiblement à la forme extérieure de la vis (4), caractérisée en ce que lesdits ergots font saillie orthogonalement à l'axe (X) du fût et sont situés respectivement entre deux lèvres adjacentes (8) l'une des lèvres étant située au-dessus de l'autre.

2. Attache selon la revendication 1, caractérisée en ce que deux ergots sont situés dans un même plan horizontal.

3. Attache selon la revendication 1 ou 2, caractérisée en ce que le fût (1) étant formé de deux parois parallèles (7) munies chacune des lèvres précitées (8), l'un des ergots (11) est situé au voisinage du bord vertical (7a) de l'une des parois (7), tandis que l'autre ergot est situé au voisinage du bord vertical opposé (7b) de l'autre paroi.

4. Attache selon l'une des revendications 1 à 3, caractérisée en ce que chaque ergot (11) comporte une partie arquée et concave (12) tournée du côté de l'axe (X) du fût (1).

5. Attache selon l'une des revendications 1 à 4, caractérisée en ce que chaque ergot (11) prend naissance sur une barrette ou analogue (13) solidaire de la paroi (7) à laquelle il est associé et s'étendant sur toute la largeur de ladite paroi entre deux lèvres adjacentes (8).

6. Attache selon l'une des revendications précédentes, caractérisée en ce que les ergots (11) ont la forme d'éléments plans de faible épaisseur, la partie arquée et concave précitée (12) étant réalisée sur la tranche de ces éléments.

7. Attache selon la revendication 5, caractérisée en ce que la barrette précitée (13) s'étend en direction de l'axe (X) du fût (1) sur une distance inférieure à la longueur des lèvres (8) faisant saillie dans le fût (1).

## Patentansprüche

1. Befestigungselement für Kabel, Rohre oder dergleichen der Art, einen Schaft (1) umfassend, dem wenigstens ein Teil (2) in Form eines Spulenträgers beigeordnet ist, der geeignet ist, besagte Kabel oder besagte Rohre aufzunehmen, wobei besagter Schaft (1) innen eine Vielzahl von Fasen (8) umfaßt, die geeignet sind, mit dem Gewinde (5) einer Schraube (4) zusammenzuwirken, sowie Führungsmittel der Schraube (4) in besagtem Schaft, die wenigstens aus zwei Nasen oder dergleichen (11) gebildet werden, die innen im Schaft (1) vorstehen und einen gebogenen Teil (12) umfassen, der deutlich der äußeren Form der Schraube (4) entspricht, dadurch gekennzeichnet, daß besagte Nasen orthogonal zur Achse (X) des Schaftes hervorstehen und sich jeweils zwischen zwei anliegenden Fasen (8) befinden, wobei eine der Fasen sich oberhalb der anderen befindet.

2. Befestigungselement gemäß Anspruch 1, dadurch gekennzeichnet, daß die zwei Nasen sich in einer selben horizontalen Ebene befinden.

3. Befestigungselement gemäß Anspruch 1 oder 2, dadurch gekennzeichnet, daß der Schaft (1) aus zwei parallelen Seitenwänden (7) gebildet wird, wobei jede mit den vorgenannten Fasen (8) versehen ist, wobei eine der Nasen (11) sich in der Nähe des vertikalen Randes (7a) einer der Seitenwände (7) befindet, während die andere Nase sich in der Nähe des der anderen Seitenwand (7b) gegenüberliegenden Randes befindet.

4. Befestigungselement gemäß einem der Ansprüche 1 bis 3, dadurch gekennzeichnet, daß jede Nase (11) einen gebogenen und konkaven Teil (12) umfaßt, der der Seite der Achse (X) des Schaftes (1) zugewandt ist.

5. Befestigungselement gemäß Anspruch 1 bis 4, dadurch gekennzeichnet, daß jede Nase (11) ihren Ursprung auf dem Steg oder dergleichen (13) hat, der mit der Seitenwand (7) fest verbunden ist, der er zugeordnet ist, und sich zwischen zwei anliegenden Fasen (8) über die ganze Breite besagter Seitenwand erstreckt.

6. Befestigungselement gemäß einem der vorherigen Ansprüche, dadurch gekennzeichnet, daß die Nasen (11) die Form ebener Elemente geringer Stärke haben, wobei der vorgenannte gebogene und konkave Teil (12) auf dem Rand dieser Elemente realisiert ist.

7. Befestigungselement gemäß Anspruch 5, dadurch gekennzeichnet, daß der vorgenannte Steg (13) sich in Richtung der Achse (X) des Schaftes (1) auf einer geringeren Distanz als der Länge der Fasen (8) erstreckt, die in dem Schaft (1) vorstehen.

## Claims

1. Fastener for cables, pipes or the like of the type comprising a shaft (1) to which is operatively associated at least one cradle shaped part (2) able to receive said cables or said pipes, which shaft (1) innerly comprises a plurality of lips (8) for co-operating with the threading (5) of a screw (4) as well as means for guiding the screw (4) in said shaft that are constituted by at least two lugs or similar (11) protruding inside the shaft (1) and comprising an arcuate part (12) substantially corresponding to the outer shape of the screw (4), characterized in that said lugs protrude orthogonally to the axis (X) of the shaft and are respectively arranged between two adjacent lips (8), one of the lips being arranged above the other.

2. Fastener according to claim 1, characterized in that two lugs are arranged in the same horizontal plan.

3. Fastener according to claim 1 or 2, characterized in that the shaft (1) being formed by two parallel walls (7) each provided with said lips (8), one of the lugs (11) is arranged near the vertical edge (7a) of one of the walls (7), while the other lug is arranged near the opposed vertical edge (7b) of the other wall.

4. Fastener according to one of claims 1 to 3, characterized in that each lug (11) comprises an arcuate and concave part (12) turned to the axis (X) of the shaft (1).

5. Fastener according to one of claims 1 to 4, characterized in that each lug (11) originates on a small bar or the like (13) that is integral with the wall (7) to which it is operatively associated and extends on all the width of said wall between two adjacent lips (8).

6. Fastener according to one of the preceding claims, characterized in that the lugs (11) have the shape of plane elements of a small thickness, said arcuate and concave part (12) being made on the edge of these elements.

7. Fastener according to claim 5, characterized in that said small bar (13) extends in direction of the axis (X) of the shaft (1) on a distance that is smaller than the length of the lips (8) protruding in the shaft (1).
